# EUROPEAN PATENT SPECIFICATION

(11) **EP 4 489 534 B1**
(45) Date of publication and mention of the grant of the patent: **08.07.2026**
(21) Application number: 24730857.0
(22) Date of filing: 10.05.2024
(51) Int. Cl.: C25D 11/18, C25D 11/02, G06F 1/16, H04M 1/02

(54) **ELECTRONIC DEVICE COMPRISING HOUSING HAVING OPENING FORMED THEREIN**
ELEKTRONISCHE VORRICHTUNG MIT GEHÄUSE MIT DARIN GEFORMTER ÖFFNUNG
DISPOSITIF ÉLECTRONIQUE COMPRENANT UN BOÎTIER AYANT UNE OUVERTURE FORMÉE À L'INTÉRIEUR DE CELUI-CI

(30) Priority: 15.05.2023 KR 20230062348; 14.06.2023 KR 20230076203
(43) Date of publication of application: 08.01.2025
(73) Proprietor: Samsung Electronics Co., Ltd, Suwon-si, Gyeonggi-do 16677 (KR)
(72) Inventor: HAN, Yunjae, Suwon-si, Gyeonggi-do 16677 (KR); HEO, Hyoseock, Suwon-si, Gyeonggi-do 16677 (KR); HONG, Jaemin, Suwon-si, Gyeonggi-do 16677 (KR)
(74) Representative: Gulde & Partner
(86) International application number: PCT/KR2024/006362
(87) International publication number: WO 2024/237593

(56) References cited:
- KR-A- 20170 109 672
- KR-A- 20220 134 409
- KR-A- 20230 016 465
- KR-B1- 101 857 366
- KR-B1- 102 208 735

## Description

### [Technical Field]

The disclosure relates to an electronic device including a housing having an opening formed therethrough.

### [Background Art]

An electronic device may include a fiducial opening in order to assemble components (e.g., a display and a decoration) at predetermined positions. The fiducial opening may be formed through a metal housing, and a fiducial recognition device may recognize the position of the fiducial opening. The components may be assembled at predetermined positions on one surface of the metal housing, based on the position information of the fiducial opening. In addition, a decoration of an electronic device may be assembled at a predetermined position, based on the position information of the fiducial opening.

KR 2022 0134409 A discloses such a conventional electronic device and manufacturing method for the electronic device.

### [Disclosure of Invention]

### [Technical Problem]

In case that a fiducial opening is formed through a housing only made of a metal material, the outer part of the fiducial opening may have an anodized color, and the inner surface of the fiducial opening may have the color of the metal material. In this case, it may be difficult for a recognition device to distinguish between the anodized color and the color of the metal material, and thus the fiducial opening may be mis-recognized.

In case that the outer part of a fiducial opening of a housing is formed of an injection-molded product, the inner surface of the fiducial opening has the color of the metal material. Therefore, a recognition device may easily distinguish between the colors of the injection-molded product and the metal material. However, due to an injection burr generated during processing the injection-molded product formed outside the fiducial opening, the recognition rate of the fiducial opening by a recognition device may be decreased.

Therefore, a housing structure capable of improving the recognition rate of a fiducial opening by a recognition device may be necessary.

### [Solution to Problem]

The present invention is set out in the appended set of claims. Further disclosure lying outside the scope of the claims serves illustrative and comparative purpose.

A housing according to the invention includes an opening of which the position is recognizable by an external recognition device, a metal part formed in the outer direction of the opening, and an injected part which is formed through an injection mold process and at least a part of which is disposed in the inner direction of the opening, and the metal part includes a first area having a predetermined color through an anodizing process; and a second area formed by at least a part of the metal part, which is processed after undergoing an anodizing process and positioned outside the circumference of the opening.

An electronic device according to the invention includes the housing and a display disposed on one surface of the housing.

A manufacturing method of an electronic device according to the invention includes an operation of forming a metal part and an injected part constituting a housing of an electronic device, an operation of performing first processing on the metal part and the injected part, an operation of performing an anodizing process on the metal part and the injected part, and an operation of performing second processing to form an opening in the metal part and the injected part.

### [Advantageous Effects of Invention]

An electronic device according to an embodiment of the disclosure includes a metal housing having an opening (e.g., a fiducial opening) formed by processing, so that injection burrs cannot be generated during forming the opening.

An electronic device according to an embodiment of the disclosure is configured such that an injected part is disposed inside an opening (e.g., a fiducial opening), and thus a recognition rate of the opening by a recognition device can be improved.

An electronic device according to an embodiment of the disclosure is configured to improve a recognition rate of an opening by a recognition device, so as to improve the accuracy of component assembly.

An electronic device according to an embodiment of the disclosure is configured to improve a recognition rate of an opening by a recognition device and thus can be advantageous for automation of an assembly process.

### [Brief Description of Drawings]

FIG. 1 is a block diagram of an electronic device in a network environment according to an embodiment.
FIG. 2A, FIG. 2B, FIG. 2C, FIG. 2D, and FIG. 2E are views showing an electronic device according to an embodiment of the disclosure.
FIG. 3 are views showing a housing and an opening according to an embodiment of the disclosure.
FIG. 4 is a cross-sectional view showing an opening of a housing according to an embodiment of the disclosure.
FIG. 5 is a perspective view showing an opening of a housing according to an embodiment of the disclosure.
FIG. 6A, FIG. 6B, and FIG. 6C are views showing a manufacturing process of a housing according to an embodiment of the disclosure.
FIG. 7 is a perspective view showing an opening of a housing according to an embodiment of the disclosure.
FIG. 8A, FIG. 8B, and FIG. 8C are views showing a manufacturing process of a housing according to an embodiment of the disclosure.
FIG. 9A, FIG. 9B, FIG. 9C, and FIG. 9D are views showing an electronic device according to an embodiment of the disclosure.
FIG. 10 is a flowchart showing a manufacturing method of an electronic device according to an embodiment of the disclosure.

### [Mode for the Invention]

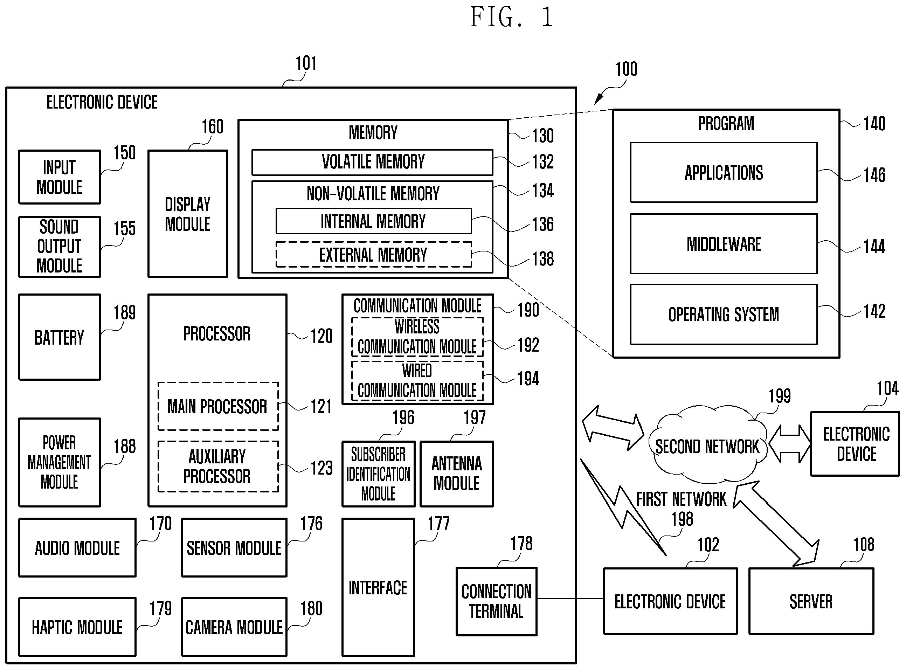

FIG. 1 is a block diagram illustrating an electronic device in a network environment according to an embodiment. Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter(mm) Wave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

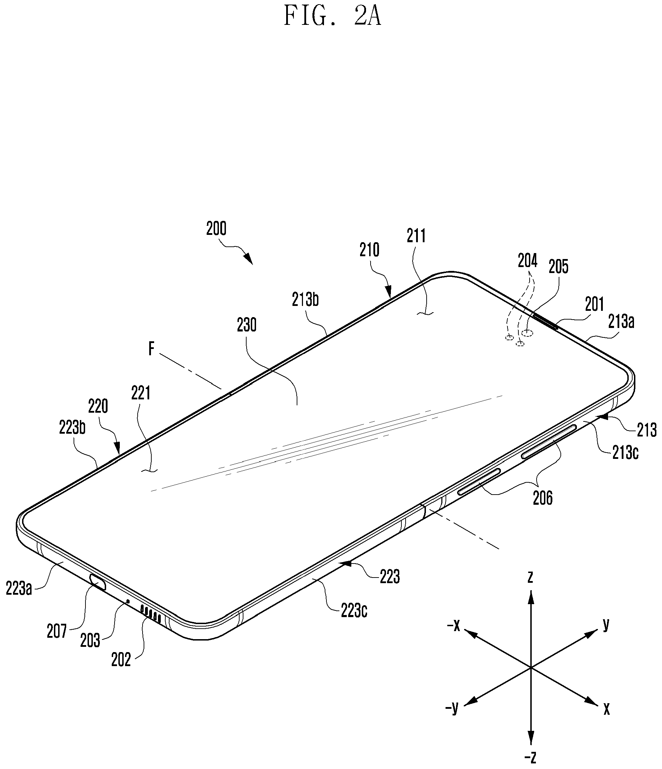

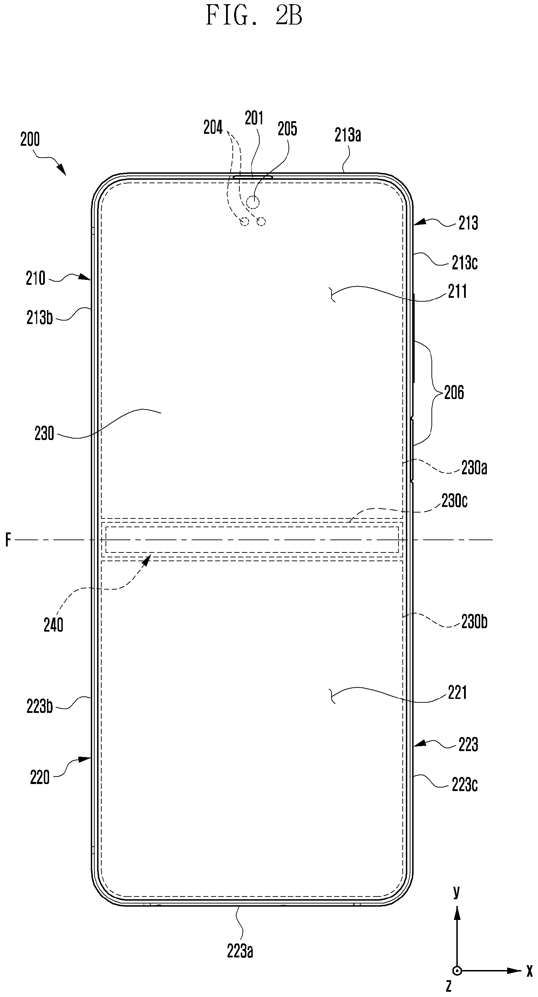

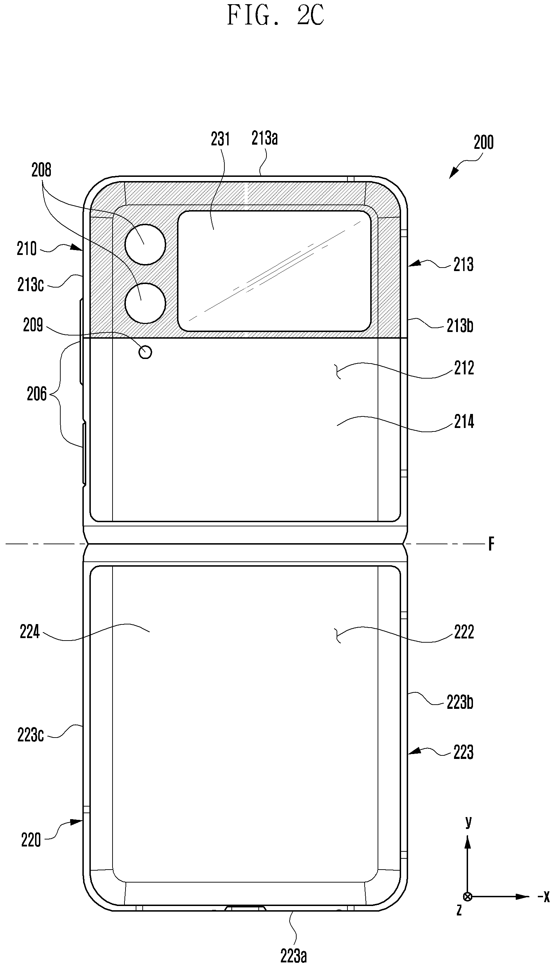

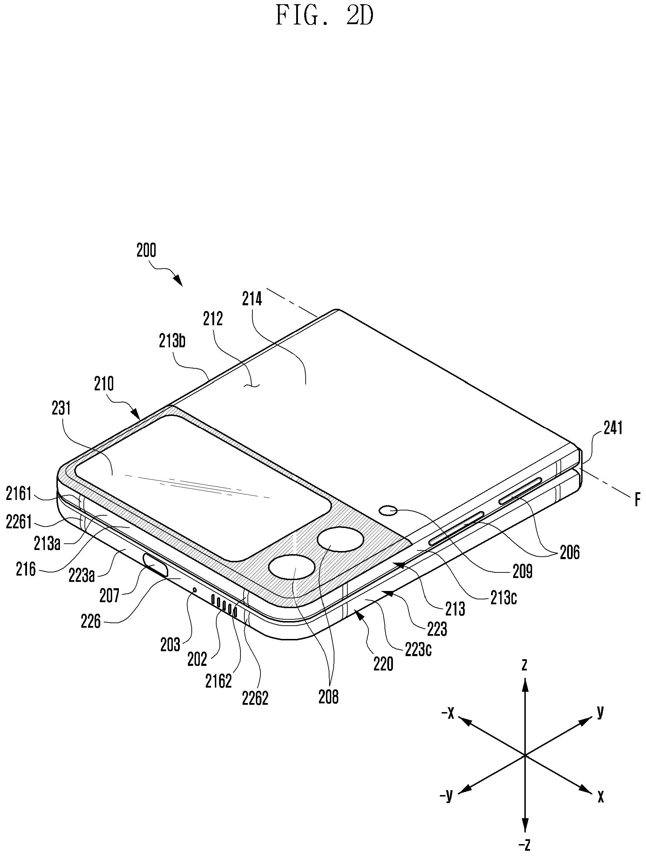

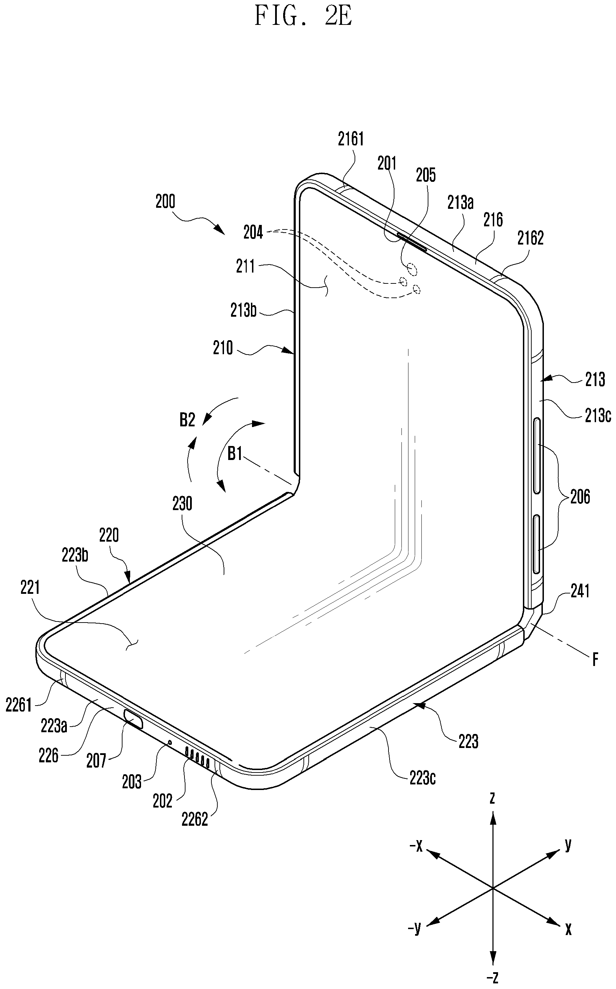

FIG. 2A, FIG. 2B, FIG. 2C, FIG. 2D, and FIG. 2E are views showing an electronic device 200 according to an embodiment of the disclosure.

FIG. 2A is a perspective view of an electronic device, which shows a flat state or an unfolded state of the electronic device according to an embodiment of the disclosure. FIG. 2B is a plan view showing the front surface of an electronic device in an unfolded state of the electronic device according to an embodiment of the disclosure. FIG. 2C is a plan view showing the rear surface of an electronic device in an unfolded state according to an embodiment of the disclosure. FIG. 2D is a perspective view of an electronic device, which shows a folded state of the electronic device according to an embodiment of the disclosure. FIG. 2E is a perspective view of an electronic device, which shows an intermediate state of the electronic device according to an embodiment of the disclosure.

Referring to FIG. 2A to FIG. 2E, an electronic device 200 may include a first and a second housing 210 and 220 (e.g., a foldable housing structure) which are foldably coupled to each other with reference to a hinge device (e.g., the hinge device 240 in FIG. 2B). In an embodiment, a hinge device (e.g., the hinge device 240 in FIG. 2B) may be disposed in the X-axis direction or in the Y-axis direction. In an embodiment, the electronic device 200 may include a first display 230 (e.g., a flexible display, a foldable display, or a main display) disposed in an area (e.g., a recess) formed by the first and the second housing 210 and 220. In an embodiment, the first housing 210 and the second housing 220 may be arranged at both sides centered on a folding axis F and may have a shape which is substantially symmetrical with respect to the folding axis F. In an embodiment, the angle or the distance between the first housing 210 and the second housing 220 may change according to a state of the electronic device 200. For example, the angle or the distance between the first housing 210 and the second housing 220 may change according to whether the electronic device is in a flat state or an unfolded state, a folded state, or an intermediate state.

In an embodiment, the first housing 210 may include a first surface 211 oriented in a first direction (e.g., a front direction) (the z-axis direction) and a second surface 212 oriented in a second direction (e.g., a rear direction) (the -z-axis direction) opposite to the first surface 211, in an unfolded state of the electronic device 200. In an embodiment, the second housing 220 may include a third surface 221 oriented in a first direction (the z-axis direction) and a fourth surface 222 oriented in a second direction (the -z-axis direction), in an unfolded state of the electronic device 200. In an embodiment, in an unfolded state of the electronic device 200, the first surface 211 of the first housing 210 and the third surface 221 of the second housing 220 may be oriented in the first directions (the z-axis direction) which are substantially the same. In an embodiment, in a folded state of the electronic device 200, the first surface 211 of the first housing 210 and the third surface 221 of the second housing 220 may face each other. In an embodiment, in an unfolded state of the electronic device 200, the second surface 212 of the first housing 210 and the fourth surface 222 of the second housing 220 may be oriented in the second directions (the -z-axis direction) which are substantially the same. In an embodiment, in a folded state of the electronic device 200, the second surface 212 of the first housing and the fourth surface 222 of the second housing 220 may be oriented in directions opposite to each other. For example, in a folded state of an electronic device 200, the second surface 212 may be oriented in the first direction (the z-axis direction), and the fourth surface 222 may be oriented in the second direction (the -z-axis direction). In this case, the first display 230 may be invisible from the outside (an in-folding type). In an embodiment, the electronic device 200 may be folded so that the second surface 212 of the first housing 210 and the fourth surface 222 of the second housing 220 face each other. In this case, the first display 230 may be disposed to be visible from the outside (an out-folding type).

According to an embodiment, the first housing 210 (e.g., a first housing structure) may include a first lateral member 213 which at least partially forms the exterior of the electronic device 200, and a first rear cover 214 which is coupled to the first lateral member 213 and forms at least a part of the second surface 212 of the electronic device 200. In an embodiment, the first lateral member 213 may include a first side surface 213a, a second side surface 213b extending from one end of the first side surface 213a, and a third side surface 213c extending from the other end of the first side surface 213a. In an embodiment, the first lateral member 213 may be formed to have a long rectangular shape (e.g., a square or a rectangle) by the first side surface 213a, the second side surface 213b, and the third side surface 213c.

According to an embodiment, the second housing 220 (e.g., a second housing structure) may include a second lateral member 223 which at least partially forms the exterior of the electronic device 200, and a second rear cover 224 which is coupled to the second lateral member 223 and forms at least a part of the fourth surface 222 of the electronic device 200. In an embodiment, the second lateral member 223 may include a fourth side surface 223a, a fifth side surface 223b extending from one end of the fourth side surface 223a, and a sixth side surface 223c extending from the other end of the fourth side surface 223a. In an embodiment, the second lateral member 223 may be formed to have a long rectangular shape by the fourth side surface 223a, the fifth side surface 223b, and the sixth side surface 223c.

According to an embodiment, the first and the second housing 210 and 220 are not limited to the illustrated shape and coupling, and may be implemented in other shapes or by a combination and/or coupling between components. In an embodiment, the first lateral member 213 may be formed integrally with the first rear cover 214, and the second lateral member 223 may be formed integrally with the second rear cover 224.

According to an embodiment, in an unfolded state of the electronic device 200, the second side surface 213b of the first lateral member 213 and the fifth side surface 223b of the second lateral member 223 may be connected without a gap. In an embodiment, in an unfolded state of the electronic device 200, the third side surface 213c of the first lateral member 213 and the sixth side surface 223c of the second lateral member 223 may be connected without a gap. In an embodiment, in an unfolded state of the electronic device 200, the electronic device may be configured such that the sum of the lengths of the second side surface 213b and the fifth side surface 223b is longer than the length of the first side surface 213a and/or the fourth side surface 223a. In an embodiment, in an unfolded state of the electronic device 200, the electronic device may be configured such that the sum of the lengths of the third side surface 213c and the sixth side surface 223c is longer than the length of the first side surface 213a and/or the fourth side surface 223a.

Referring to FIG. 2D and FIG. 2E, the first lateral member 213 and/or the second lateral member 223 may be formed of a metal material or may further include polymer injected to the metal material. In an embodiment, the first lateral member 213 and/or the second lateral member 223 may also include at least one conductive portion 216 and/or 226 electrically segmented through at least one segment part 2161 or 2162 and/or 2261 or 2262 formed of polymer. In this case, the at least one conductive portion 216 and/or 226 may be electrically connected to a wireless communication circuit included in the electronic device 200, and thus be used as at least a part of an antenna which operates in at least one designated band (e.g., a legacy band).

According to an embodiment, for example, the first rear cover 214 and/or the second rear cover 224 may be formed of at least one of coated or colored glass, ceramic, polymer, or metal (e.g., aluminum, stainless steel (STS), or magnesium) or a combination of at least two thereof.

According to an embodiment, the first display 230 may be disposed to extend from the first surface 211 of the first housing 210 to at least a part of the third surface 221 of the second housing 220 while crossing a hinge device (e.g., the hinge device 240 in FIG. 2B). In an embodiment, the first display 230 may include a first area 230a substantially corresponding to the first surface 211, a second area 230b corresponding to the second surface 212, and a third area 230c (e.g., a bendable area or a folding area) connecting the first area 230a and the second area 230b. In an embodiment, the third area 230c may be a part of the first area 230a and/or the second area 230b and may be disposed at a position corresponding to a hinge device (e.g., the hinge device 240 in FIG. 2B). In an embodiment, the electronic device 200 may include a hinge housing 241 (e.g., a hinge cover) which supports a hinge device (e.g., the hinge device 240 in FIG. 2B). In an embodiment, the hinge housing 241 may be exposed to the outside in case that the electronic device 200 is in a folded state, and may be disposed to be inserted into an inner space of the first housing 210 and an inner space of the second housing 220 and thus be invisible from the outside in case that the electronic device 200 is in an unfolded state.

According to an embodiment, the electronic device 200 may include a second display 231 (e.g., a sub-display) disposed separately from the first display 230. In an embodiment, the second display 231 may be disposed to be at least partially exposed on the second surface 212 of the first housing 210. In an embodiment, in case that the electronic device 200 is in a folded state, the second display 231 may replace at least a part of a display function of the first display 230 and thus may display at least a part of the state information of the electronic device 200. In an embodiment, the second display 231 may be disposed to be visible from the outside through at least a partial area of the first rear cover 214. In an embodiment, the second display 231 may also be disposed on the fourth surface 222 of the second housing 220. In this case, the second display 231 may be disposed to be visible from the outside through at least a partial area of the second rear cover 224.

According to an embodiment, the electronic device 200 may include at least one of an input device 203 (e.g., a microphone), sound output devices 201 and 202, a sensor module 204, camera devices 205 and 208, a key input device 206, or a connector port 207. In the illustrated embodiment, although the input device 203 (e.g., a microphone), the sound output devices 201 and 202, the sensor module 204, the camera devices 205 and 208, the key input device 206, or the connector port 207 is shown as a hole or an element having a circular shape, which is formed through or in the first housing 210 or the second housing 220, it is an exemplary illustration for description and is not limited thereto. According to an embodiment, the input device 203 may include at least one microphone 203 disposed in the second housing 220. In an embodiment, the input device 203 may include multiple microphones 203 arranged to detect the direction of sound. In an embodiment, the multiple microphones 203 may be arranged at appropriate positions in the first housing 210 and/or the second housing 220. In an embodiment, the sound output devices 201 and 202 may include at least one speaker 201 and 202. In an embodiment, the at least one speaker 201 and 202 may include a receiver 201 for calling, which is disposed in the first housing 210, and a speaker 202 disposed in the second housing 220. In an embodiment, the input device 203, the sound output devices 201 and 202, and the connector port 207 may be arranged in a space provided in the first housing 210 and/or the second housing 220 of the electronic device 200, and may be exposed to an external environment through at least one hole formed through the first housing 210 and/or the second housing 220. In an embodiment, at least one connector port 207 may be used for transmitting or receiving power and/or data to or from an external electronic device. In an embodiment, at least one connector port (e.g., an ear jack hole) may also accommodate a connector (e.g., ear jack) configured to transmit or receive audio signals to or from an external electronic device. In an embodiment, a hole formed through the first housing 210 and/or the second housing 220 may be commonly used for the input device 203 and the sound output devices 201 and 202. In an embodiment, the sound output devices 201 and 202 may also include a speaker (e.g., a piezo speaker) which is not exposed through a hole formed through the first housing 210 and/or the second housing 220.

According to an embodiment, the sensor module 204 may generate an electrical signal or a data value corresponding to an internal operation state of the electronic device 200 or an external environmental state. In an embodiment, the sensor module 204 may detect an external environment through the first surface 211 of the first housing 210. In an embodiment, the electronic device 200 may also further include at least one sensor module disposed to detect an external environment through the second surface 212 of the first housing 210. In an embodiment, the sensor module 204 (e.g., an illuminance sensor) may be disposed below the first display 230 to detect an external environment through the first display 230. In an embodiment, the sensor module 204 may include at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor, a proximity sensor, a biological sensor, an ultrasonic sensor, or an illumination sensor 204.

According to an embodiment, the camera devices 205 and 208 may include a first camera device 205 (e.g., a front camera device) disposed on the first surface 211 of the first housing 210, and a second camera device 208 disposed on the second surface 212 of the first housing 210. In an embodiment, the electronic device 200 may further include a flash 209 disposed near the second camera device 208. In an embodiment, each of the camera devices 205 and 208 may include at least one lens, an image sensor, and/or an image signal processor. In an embodiment, the camera devices 205 and 208 may be arranged so that two or more lenses (e.g., a wide-angle lens, an ultra-wide-angle lens, or a telephoto lens) and two or more image sensors are positioned on one surface (e.g., the first surface 211, the second surface 212, the third surface 221, or the fourth surface 222) of the electronic device 200. In an embodiment, each of the camera devices 205 and 208 may also include an image sensor and/or lenses for time of flight (TOF).

According to an embodiment, the key input device 206 (e.g., a key button) may be disposed on the third side surface 213c of the first lateral member 213 of the first housing 210. In an embodiment, the key input device 206 may also be disposed on at least one side surface of other side surfaces 213a and 213b of the first housing 210 and/or the side surfaces 223a, 223a, and 2223c of the second housing 220. In an embodiment, the electronic device 200 may not include a part or the whole of the key input device 206, and the key input device 206 not included therein may also be implemented as a different type, such as a soft key, on the first display 230. In an embodiment, the key input device 206 may also be implemented using a pressure sensor included in the first display 230.

According to an embodiment, the sensor module 204 or a camera device (e.g., the first camera device 205) among the camera devices 205 and 208 may be disposed to be exposed through the first display 230. In an embodiment, the first camera device 205 or the sensor module 204 may be optically exposed to the outside through an opening (e.g., a through-hole) which is at least partially formed through the first display 230, in an inner space of the electronic device 200. In an embodiment, at least a part of the sensor module 204 may also be disposed so as not to be visually exposed through the first display 230, in an inner space of the electronic device 200. Referring to FIG. 2B, the electronic device 200 may operate to maintain at least one designated folding angle in an intermediate state through a hinge device (e.g., the hinge device 240 in FIG. 2B). In this case, the electronic device 200 may control the first display 230 so that different contents are displayed on a display area corresponding to the first surface 211 and a display area corresponding to the third surface 221. In an embodiment, the electronic device 200 may change to a substantially unfolded state (e.g., the unfolded state in FIG. 2A) and/or a substantially folded state (e.g., the folded state in FIG. 2D) with reference to a predetermined folding angle (e.g., the angle between the first housing 210 and the second housing 220 in case that the electronic device 200 is in an intermediate state) through a hinge device (e.g., the hinge device 240 in FIG. 2B). In an embodiment, the electronic device 200 may operate to be switched to an unfolded state (e.g., the unfolded state in. FIG. 2A), in case that a pressing force is applied to the electronic device in the direction (direction B1) in which the electronic device is unfolding through a hinge device (e.g., the hinge device 240 in FIG. 2B), in a state where the electric device is unfolded at a predetermined folding angle. In an embodiment, the electronic device 200 may operate to be switched to a folded state (e.g., the folded state in. FIG. 2D), in case that a pressing force is applied to the electronic device in the direction (direction B2) in which the electronic device is folding through a hinge device (e.g., the hinge device 240 in FIG. 2B), in a state where the electric device is unfolded at a predetermined folding angle. In an embodiment, the electronic device 200 may operate to maintain an unfolded state (not shown) at various folding angles through a hinge device (e.g., the hinge device 240 in FIG. 2B) (a free stop function).

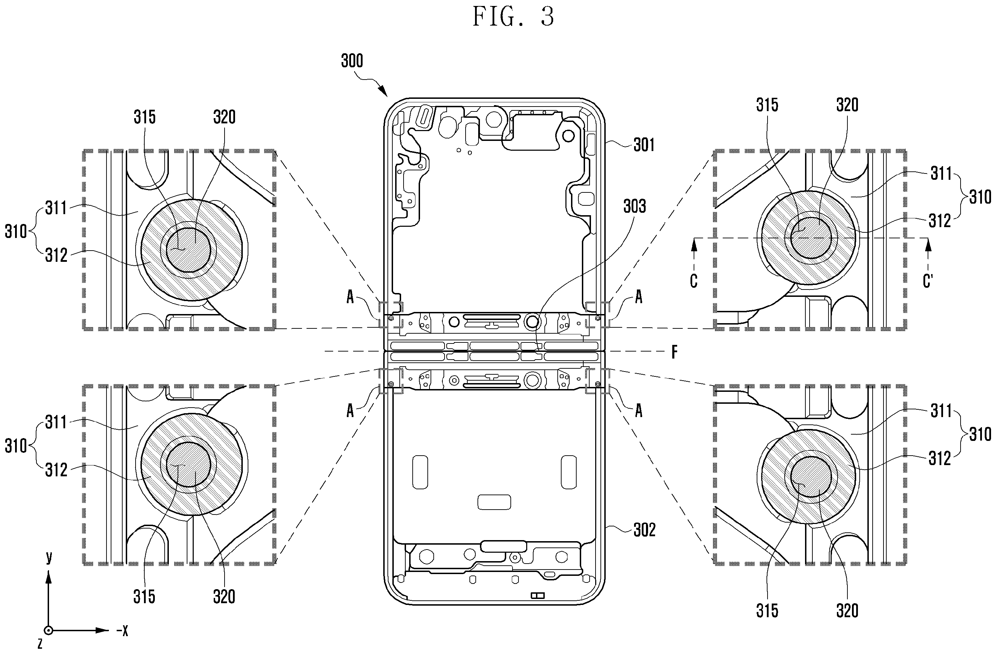

FIG. 3 are views showing a housing 300 and an opening 315 according to an embodiment of the disclosure.

In describing a housing 300 according to an embodiment of the disclosure, the length direction of the housing 300 may mean the y-axis direction, and the width direction thereof may mean the x-axis direction. The height direction of the housing 300 may mean the z-axis direction.

In an embodiment, the housing 300 may form the exterior of an electronic device (e.g., the electronic device 101 in FIG. 1 or the electronic device 200 in FIG. 2), or may function to provide a space in which components of an electronic device are arranged.

In an embodiment, the housing 300 may mean the housings 210 and 220 included in the electronic device 200 in FIG. 2A. For example, the housing 300 may mean the housings 210 and 220 in FIG. 2A, or may include at least a part of the housings 210 and 220 in FIG. 2A.

Referring to FIG. 3, although the housing 300 is shown as being applied to a foldable electronic device, it is an example for description, and a device, to which the housing 300 is applied, is not limited to a foldable electronic device.

In an embodiment, the housing 300 may include a first housing 301, a second housing 302, and/or a hinge 303.

In an embodiment, the hinge 303 may connect the first housing 301 and the second housing 302 to be rotatable with respect to each other around a folding axis F.

In an embodiment, the first housing 301 and the second housing 302 may be arranged to be symmetrical centered on the hinge 303.

In an embodiment, the housing 300 includes a metal part 310, an injected part 320, and/or an opening 315.

In an embodiment, the metal part 310 may be an area among areas of the housing 300, which is formed of a metal material. For example, the metal part 310 may include aluminum, aluminum alloy, stainless steel, and/or magnesium.

In an embodiment, the injected part 320 may be an area among areas of the housing 300, which is formed through an injection mold process. For example, the injected part 320 may be formed by a material, such as a plastic material, which has undergone an injection mold process and then is formed in at least a part of the housing 300.

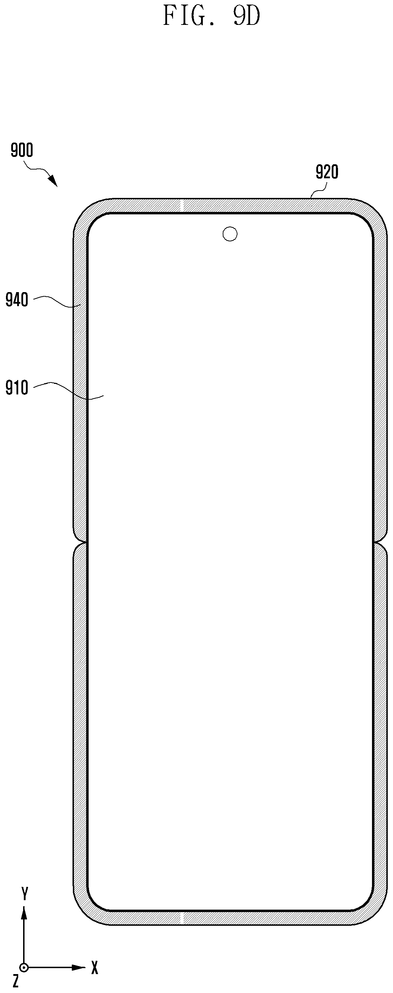

In an embodiment, the opening 315 may be an opening formed by processing at least a part of the metal part 310. The opening 315 may be a fiducial opening recognized as a reference position in order to dispose a display (see 910 in FIG. 9D) or a decoration (see 940 in FIG. 9D) at a predetermined position on the housing 300.

The area A illustrated in FIG. 3 may mean an area in which the opening 315 is formed through the housing 300.

In an embodiment, the opening 315 may be formed in a circular shape. In forming the opening 315, a circular shape may be a shape advantageously processed by a processing device (not shown). In case that the opening 315 has a circular shape, it may be advantageous for the opening 315 to be recognized by a recognition device (not shown).

In an embodiment, the housing 300 may include multiple openings 315. For example, the openings 315 may be formed through each of the first housing 301 and the second housing 302. The multiple openings 315 may be formed at positions which are symmetrical to each other centered on the folding axis F.

In an embodiment, the metal part 310 includes a first area 311 and/or a second area 312. The first area 311 may be an area having a color distinct from the second area 312.

In an embodiment, the housing 300 may be manufactured through an anodizing process. For example, the metal part 310 of the housing 300 may undergo an anodizing process before final processing. An anodizing process may be a process for forming an oxidation film in order to protect the surface of a metal material. The metal part 310 may have a predetermined color through an anodizing process. For example, the first area 311 may not undergo a separate processing process after an anodizing process, and thus may have a color caused by an anodizing process.

In an embodiment, the second area 312 may be an area which has additionally undergone a processing process (e.g., a cutting processing process or a laser processing process) after an anodizing process. The second area 312 may have the color of a metal material included in the housing 300 rather than the color caused by an anodizing process. For example, the second area 312 may have a silver color or a glossy color.

In an embodiment, the injected part 320 may be disposed in the opening 315. The injected part 320 may be distinguished from the second area 312 by a recognition device (not shown) outside the housing 300. For example, the recognition device may distinguish the injected part 320 and the second area 312, based on the difference in reflective light.

In an embodiment, a recognition device (not shown) outside the housing 300 may recognize the position at which the opening 315 of the housing 300 is formed. A recognition device (not shown) may recognize the inner surface and the outer part of the opening 315 by distinguishing same into a black color and a white color. Components (e.g., a display and a panel) may be arranged at predetermined positions on the housing 300, based on the position of the opening 315 recognized by the recognition device.

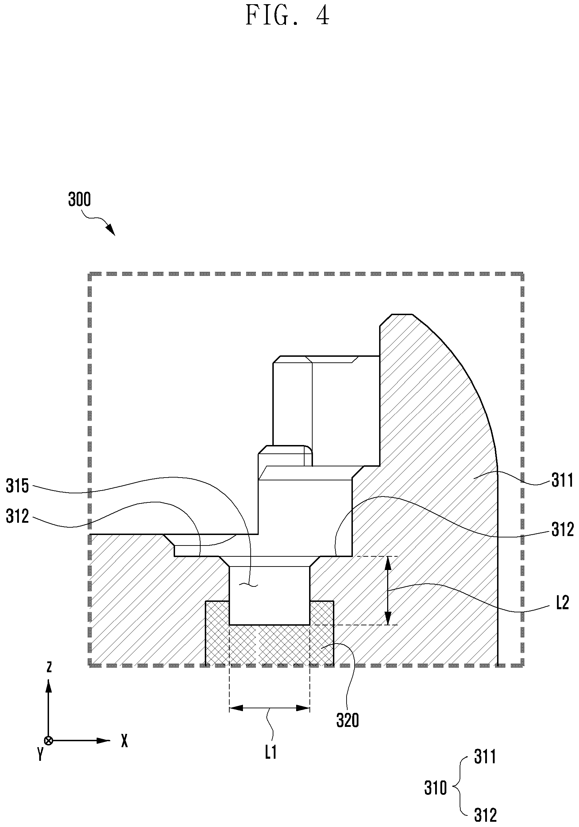

FIG. 4 is a cross-sectional view showing a housing 300 and an opening 315 according to an embodiment of the disclosure.

FIG. 4 may be a view showing the opening 315 of the housing 300, which is seen from the cross section along line C-C' illustrated in FIG. 3.

In an embodiment, the boundary of the opening 315 may be distinguished through the positions at which the injected part 320 and the second area 312 of the housing 300 are formed. For example, referring to FIG. 4, at least a part of the injected part 320 may be disposed inside the opening 315, and the second area 312 of the housing 300 may be disposed outside the opening 315.

In an embodiment, the injected part 320 may be disposed at the end part (e.g., the end part positioned in the -z-axis direction in the opening 315) of the opening 315. In case that the opening 315 is seen by a recognition device (not shown), the injected part 320 positioned at the end part of the opening 315 may be recognized.

In an embodiment, the opening 315 may be formed to have a predetermined width in the width direction (e.g., the x-axis direction) or the length direction (e.g., the y-axis direction) of the housing 300. For example, the opening 315 may be configured to extend in the width direction (e.g., the x-axis direction) or the length direction (e.g., the y-axis direction) of the housing 300 by a first length L1. In an embodiment, the first length L1 of the opening 315 may be a length within the range of approximately 0.3 - 1.0 mm.

In an embodiment, the opening 315 may be formed to extend in the height direction (e.g., the z-axis direction) of the housing 300. For example, the opening 315 may be configured to extend in the height direction (e.g., the z-axis direction) of the housing 300 by a second length L2 with reference to one surface of the second area 312. In an embodiment, the second length L2 of the opening 315 may be a length within the range of approximately 0.3 - 1.0 mm.

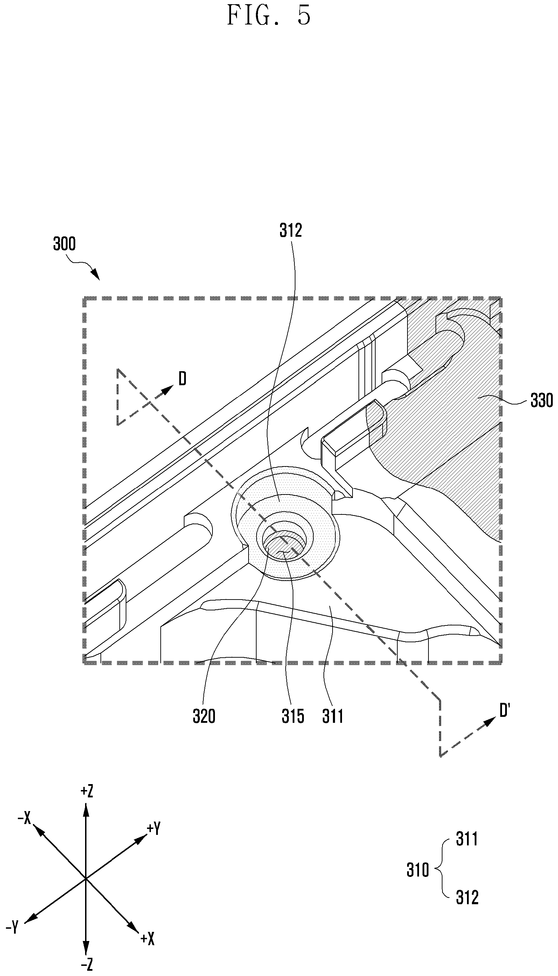

FIG. 5 is a perspective view showing a housing 300 and an opening 315 according to an embodiment of the disclosure.

In an embodiment, the opening 315 may be formed in a circular shape. For example, the opening 315 may be formed in a shape in which a circular-shaped opening extends in the height direction (e.g., the z-axis direction) of the housing 300.

In an embodiment, the opening 315 may be formed in a shape in which one end thereof is blocked. For example, the one end of the opening 315 may be formed to be blocked by the injected part 320.

In an embodiment, the outer direction of the opening 315 may mean a direction away from the opening 315. The inner direction of opening 315 may mean a direction opposite to the outer direction.

In an embodiment, at least a part of the metal part 310 of the housing 300 may be formed in the outer direction of the opening 315. In an embodiment, the second area 312 of the metal part 310 may be formed around the opening 315. The second area 312 of the metal part 310 may be an area among areas of the metal part 310, which has undergone an additional processing process after an anodizing process.

In an embodiment, the second area 312 may be configured such that at least a part thereof extends from the circumference of the opening 315. The second area 312 may extend by a predetermined distance in a direction away from the center of the opening 315. The length, in which the second area 312 extends in a direction away from the center of the opening 315, may be changed according to the type of a recognition device (not shown) for recognizing the opening 315.

In an embodiment, the first area 311 of the metal part 310 may be an area among areas of the metal part 310, which is positioned around the second area 312. The first area 311 of the metal part 310 may be an area among areas of the metal part 310, which has not undergone an additional processing process (e.g., a cutting processing process or a laser processing process) after an anodizing process.

In an embodiment, the housing 300 may include a surface injected part 330. The surface injected part 330 may be formed through an injection mold process and may be disposed to cover at least a part of the surface of the metal part 310.

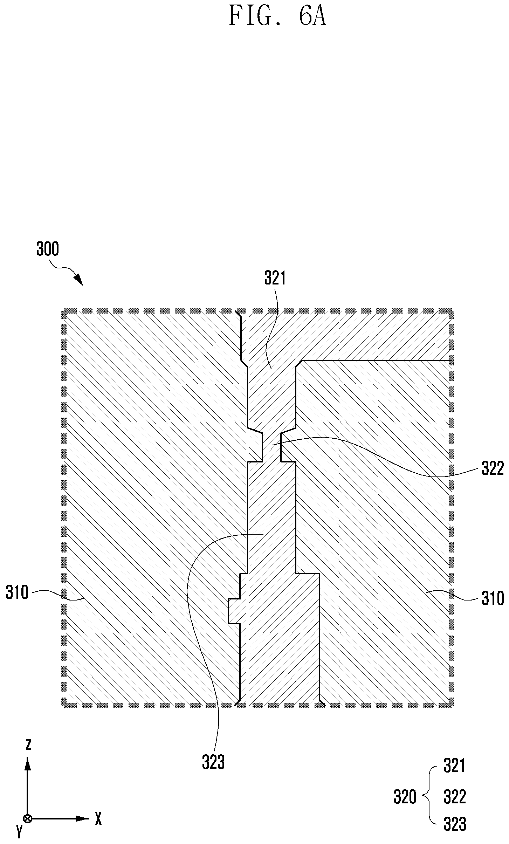

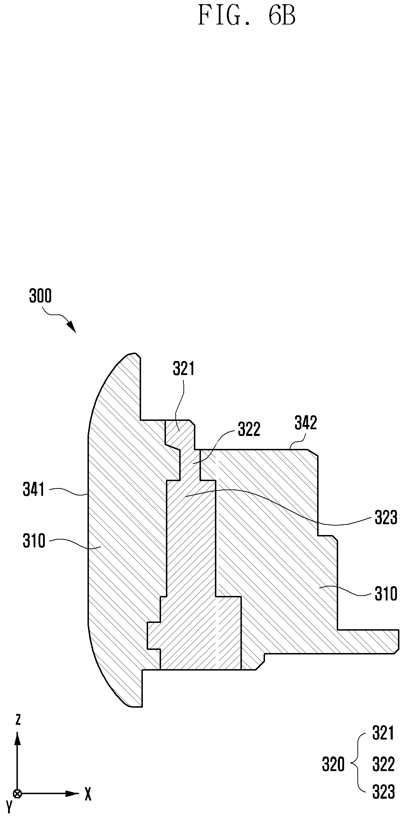

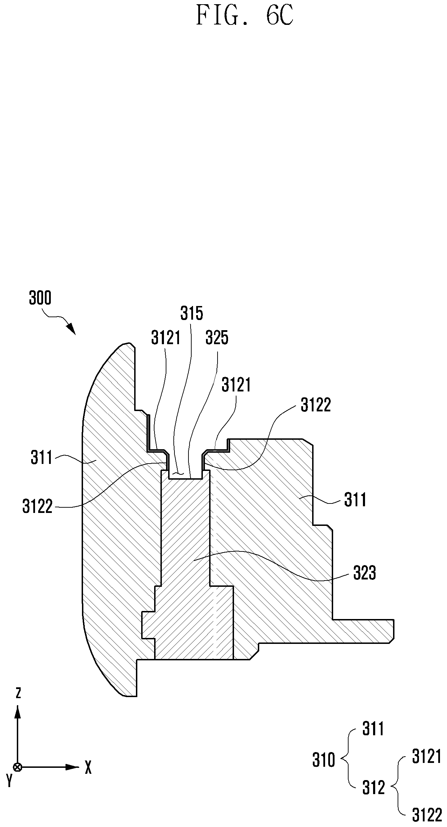

FIG. 6A, FIG. 6B, and FIG. 6C are views showing a manufacturing process of a housing 300 according to an embodiment of the disclosure.

FIG. 6A, FIG. 6B, and FIG. 6C may be views showing the housing 300, which are seen from a cross section along line D-D' in FIG. 5.

FIG. 6A may be a view showing a state before the housing 300 according to an embodiment undergoes processing. FIG. 6B may be a view showing a state in which the housing 300 according to an embodiment has undergone processing before undergoing an anodizing process. FIG. 6C may be a view showing a state in which the opening 315 is formed through the housing 300 according to an embodiment through processing after an anodizing process.

Referring to FIG. 6A, the metal part 310 and the injected part 320 may be formed before the housing 300 undergoes processing. The metal part 310 may be disposed to surround at least a part of the injected part 320. Referring to FIG. 6A, at least a part of the injected part 320 may extend along the height direction (e.g., z-axis direction) of the housing 300.

Referring to FIG. 6A, in a state before the housing 300 undergoes processing, the injected part 320 may include an upper end area 321, a connection area 322, and/or a lower end area 323.

In an embodiment, the connection area 322 may be an area connecting the upper end area 321 and the lower end area 323. The upper end area 321 may be an area connected to one end (e.g., the end in the +z-axis direction centered on the connection area 322) of the connection area 322. The lower end area 323 may be an area connected to the other end opposite to the one end of the connection area 322.

In an embodiment, the connection area 322 may be formed thinner than the upper end area 321 and the lower end area 323. For example, the width (e.g., the length extending in the x-axis or the y-axis direction) of the connection area 322 may be formed to be smaller than the width (e.g., the length extending in the x-axis or the y-axis direction) of the upper end area 321 and lower end area 323.

In an embodiment, before an anodizing process is performed on the housing 300, at least a part of the injected part 320 and the metal part 310 of the housing 300 except for the area in which the opening 315 is formed may be processed.

Referring to FIG. 6B, at least a part of the metal part 310 and the injected part 320 may be removed through processing before an anodizing process.

Referring to FIG. 6B, a side surface 341 of the housing 300 may be formed through processing before an anodizing process. The side surface 341 of the housing 300 may be a surface extending in a direction substantially perpendicular to the width direction (e.g., the x-axis direction) of the housing 300. The side surface 341 of the housing 300 may be a surface forming the side surface of an electronic device (e.g., the electronic device 200 in FIG. 2).

Referring to FIG. 6B, a seat part 342 of the housing 300 may be formed through processing before an anodizing process. The seat part 342 may be a portion on which other components (e.g., a printed circuit board) of an electronic device (e.g., the electronic device 200 in FIG. 2) are seated.

Referring to FIG. 6B, at least a part of the injected part 320 may be exposed to the outside of the housing 300 through processing before an anodizing process. For example, a part of the upper end area 321 of the injected part 320 may be removed through processing before an anodizing process, so that the upper end area 321 is exposed to the outside of the housing 300.

Referring to FIG. 6B, in a state of having undergone processing before an anodizing process, at least a part of the upper end area 321 may further protrude in the height direction of the housing 300 compared to one surface of the seat part 342.

In an embodiment, an anodizing process may be performed on the housing 300 illustrated in FIG. 6B. For example, an oxidation film may be formed on the outer surface of the housing 300 illustrated in FIG. 6B through an anodizing process. The outer surface of the housing 300 may have a color caused by an anodizing process.

Referring to FIG. 6C, the opening 315 may be formed through processing after an anodizing process. The opening 315 may be formed by removing at least a part of the metal part 310 and the injected part 320 through processing. For example, referring to FIG. 6B and FIG. 6C, the opening 315 may be formed by removing a part of the metal part 310 and the upper end area 321 and the connection area 322 of the injected part 320 through processing after an anodizing process.

In an embodiment, the opening 315 may be an opening extending in the height direction (e.g., the z-axis direction) of the housing 300. The opening 315 may be a fiducial opening recognized as a reference position in order to arrange components (e.g., a display and a decoration) at predetermined positions on the housing 300.

In an embodiment, the opening 315 may be formed in a shape in which one end thereof is blocked. For example, the end of the opening 315, which is positioned in the -z-axis direction, may be blocked by the lower end area 323 of the injected part 320. An outer exposure surface 325 of the injected part 320 at the one end of the opening 315 may be exposed to the outside of the housing 300.

Referring to FIG. 6C, the metal part 310 may be divided into the first area 311 and the second area 312 through processing after an anodizing process. For example, the first area 311 may be an area among areas of the metal part 310, which has not undergone processing after undergoing an anodizing process. The second area 312 may be an area among areas of the metal part 310, which has undergone processing after undergoing an anodizing process.

In an embodiment, the second area 312 is formed through processing after an anodizing process, and thus may have a color distinct from the first area 311. For example, the first area 311 has not undergone separate processing after an anodizing process and thus may have a color caused by the anodizing process, and the second area 312 has undergone processing after an anodizing process and thus may have a color of a metal material included in the housing 300.

In an embodiment, the second area 312 and the injected part 320 may be distinguished by an external recognition device (not shown). The exposed metal material of the second area 312 and the outer exposure surface 325 of the injected part 320 may be distinguished by an external recognition device (not shown) due to the difference in reflective light. For example, since the external exposure surface 325 reflects a small amount of light compared to the second area 312, a recognition device (not shown) may easily distinguish the exposure surface 325 and the second area 312.

In an embodiment, the second area 312 may include a (2-1)th area 3121 and/or a (2-2)th area 3122. The (2-1)th area 3121 may be an area surrounding the circumference of the opening 315. For example, the (2-1)th area 3121 may be formed to be oriented in the height direction (e.g., the z-axis direction) of the housing 300 on the circumferential of the opening 315.

In an embodiment, the (2-2)th area 3122 may include a surface facing the inside of the opening 315. For example, the (2-2)th area 3122 may extend along the height direction (e.g., the z-axis direction) of the housing 300 while facing the inside of the opening 315. The (2-2)th area 3122 may correspond to a boundary surface of the opening 315.

In an embodiment, an external recognition device (not shown) may distinguish and indicate the outer exposure surface 325 of the injected part 320 and the second area 312. For example, a recognition device may distinguish and indicate the outer exposure surface 325 and the second area 312 into a black color or a white color, based on the difference in reflective light. A recognition device may distinguish the outer exposure surface 325 and the second area 312, based on the difference in reflective light, and thus may easily recognize the position of the opening 315.

Referring to FIG. 6C, the opening 315 may be formed to be surrounded by the second area 312 of the housing 300. Since the housing 300 includes a metal material, a cutting surface thereof formed by processing may be uniformly formed. In case that an injection-molded product is positioned outside the opening 315, the boundary surface of the opening 315 may be unevenly formed due to injection burrs of the inj ection-molded product surrounding the opening 315. However, according to the housing having the opening 315 according to an embodiment of the disclosure, the injected part 320 is positioned inside the opening 315 and a metal material included in the housing 300 is positioned outside the opening 315. Therefore, the boundary surface of the opening 315 can be formed relatively uniformly.

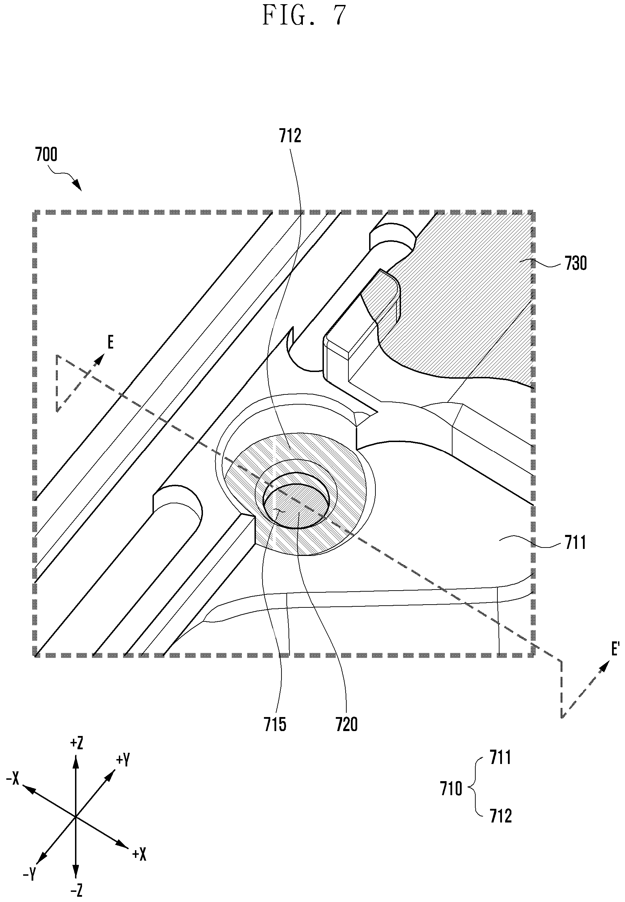

FIG. 7 is a perspective view showing an opening 715 of a housing 700 according to an embodiment of the disclosure.

FIG. 7 may be a view showing an opening 715 surrounded by a second area 712 of a metal part 710 formed through a laser post-processing process.

In an embodiment, a housing 700 includes a metal part 710, an injected part 720, and/or an opening 715. The metal part 710 may be an area among areas of the housing 700, which is formed of a metal material. The injected part 720 may be an area among areas of the housing 700, which is formed through an injection mold process.

In the embodiment, the opening 715 may be an opening formed by processing at least a part of the metal part 710. The opening 715 may be a fiducial opening recognized as a reference position in order to dispose a display (see 910 in FIG. 9D) or a decoration (see 940 in FIG. 9D) at a predetermined position on the housing 700. In an embodiment, the opening 715 may be formed in a circular shape.

In an embodiment, the metal part 710 may include a first area 711 and/or a second area 712. The first area 711 and the second area 712 may be areas having colors distinct from each other.

In an embodiment, the second area 712 may be an area among areas of the metal part 710, which has undergone a laser post-processing process after an anodizing process. The first area 711 may be an area among areas of the metal part 710, which has not undergone a laser post-processing process after an anodizing process.

In an embodiment, a laser post-processing process may mean a process of irradiating a laser to the surface of the housing 700 so as to burn a part of the surface of the housing 700.

In an embodiment, the second area 712 may be formed to surround the circumference of the opening 715. For example, in case that the opening 715 is formed in a circular-shaped opening, the second area 712 may be formed to surround the circumference of a circle. In an embodiment, the first area 711 may be disposed around the second area 712.

In an embodiment, the opening 715 may be formed in a shape in which one end thereof is blocked. For example, the one end of the opening 715 may be formed to be blocked by the injected part 720.

In an embodiment, the injected part 720 is disposed inside the opening 715, and the second area 712 of the metal part 710 is disposed outside the opening 715. The injected part 720 may be distinguished from the second area 712 by a recognition device (not shown) outside the housing 700. For example, the recognition device may distinguish the injected part 720 and the second area 712, based on the difference in reflective light.

In an embodiment, the housing 300 may include a surface injected part 730. The surface injected part 730 may be formed through an injection mold process and may be disposed to cover at least a part of the surface of the metal part 710.

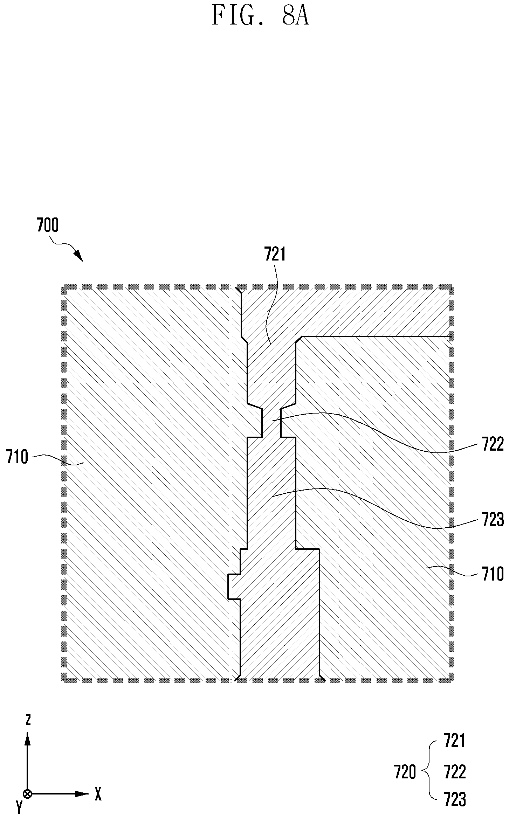

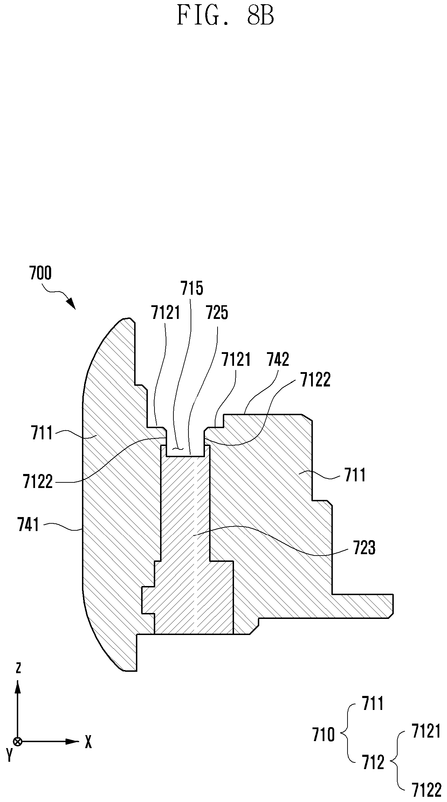

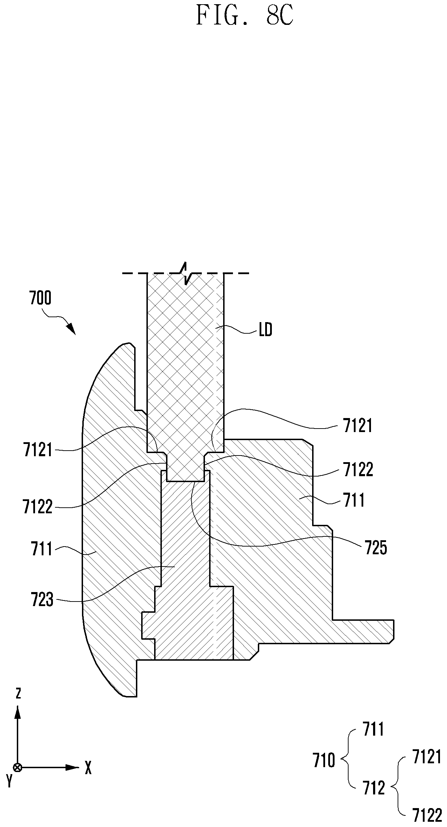

FIG. 8A, FIG. 8B, and FIG. 8C are views showing a manufacturing process of a housing 700 according to an embodiment of the disclosure.

FIG. 8A, FIG. 8B, and FIG. 8C may be views showing the housing 700, which are seen from a cross section along line E-E' in FIG. 7.

FIG. 8A may be a view showing a state before the housing 700 according to an embodiment undergoes processing. FIG. 8B may be a view showing a state in which the housing 700 according to an embodiment has undergone processing before undergoing an anodizing process. FIG. 8C may be a view showing a state in which a laser post-processing process after an anodizing process is applied to the housing 700 according to an embodiment.

Referring to FIG. 8A, the metal part 710 and the injected part 720 may be formed before the housing 700 undergoes processing. The metal part 710 may be disposed to surround at least a part of the injected part 720. Referring to FIG. 8A, at least a part of the injected part 720 may extend along the height direction (e.g., z-axis direction) of the housing 700.

Referring to FIG. 8A, in a state before the housing 700 undergoes processing, the injected part 720 may include an upper end area 721, a connection area 722, and/or a lower end area 723. The connection area 722 may have one end connected to the upper end area 721 and the other end connected to the lower end area 723.

In a state before the housing 700 undergoes processing, the shape and detailed configuration of the injected part 720 of the housing 700 according to an embodiment may be substantially the same as the shape and detailed configuration of the injected part 320 in FIG. 6A.

Referring to FIG. 8B, at least a part of the injected part 720 and the metal part 710 may be removed through processing before an anodizing process.

Referring to FIG. 8B, a side surface 741 of the housing 700 may be formed through processing before an anodizing process. The side surface 741 of the housing 700 may be a surface extending in a direction substantially perpendicular to the width direction (e.g., the x-axis direction) of the housing 700. The side surface 741 of the housing 700 may be a surface forming the side surface of an electronic device (e.g., the electronic device 200 in FIG. 2).

Referring to FIG. 8B, a seat part 742 of the housing 700 may be formed through processing before an anodizing process. The seat part 742 may be a portion on which other components (e.g., a printed circuit board) of an electronic device (e.g., the electronic device 200 in FIG. 2) are seated.

Referring to FIG. 8B, the opening 715 may be formed through processing before an anodizing process. The opening 715 may be formed by removing at least a part of the metal part 710 and the injected part 720 through processing. For example, referring to FIG. 8A and FIG. 8B, the opening 715 may be formed by removing a part of the metal part 710 and the upper end area 721 and the connection area 722 of the injected part 720 through processing before an anodizing process.

In an embodiment, the opening 715 may be an opening extending in the height direction (e.g., the z-axis direction) of the housing 700. The opening 715 may be a fiducial opening recognized as a reference position in order to arrange components (e.g., a display and a decoration) at predetermined positions on the housing 700.

In an embodiment, the opening 715 may be formed in a shape in which one end thereof is blocked. For example, the end of the opening 715, which is positioned in the -z-axis direction, may be blocked by the lower end area 723 of the injected part 720. An outer exposure surface 725 of the injected part 720 at the one end of the opening 715 may be exposed to the outside of the housing 700.

In the housing 700 according to an embodiment, the side surface 741, the seat part 742, and the opening 715 of the housing 700 may be formed through processing before an anodizing process.

In an embodiment, an anodizing process may be performed on the housing 700 illustrated in FIG. 8B. For example, an oxidation film may be formed on the outer surface of the housing 700 illustrated in FIG. 8B through an anodizing process. The outer surface of the housing 700 may have a color caused by an anodizing process.

In an embodiment, after an anodizing process is applied to the housing 700, a laser post-processing process may be performed around the opening 715. For example, referring to FIG. 8B and FIG. 8C, a laser LD may be irradiated to the second area 712 of the metal part 710, which surrounds the opening 715, and the lower end area 723 of the injected part 720.

In an embodiment, areas of the metal part 710 may be distinguished through a laser post-processing process. For example, the second area 712 may be an area among areas of the metal part 710, which has undergone a laser post-processing process. The first area 711 may be an area among areas of the metal part 710, which has not undergone a laser post-processing process.

In an embodiment, the second area 712 which has undergone a laser post-processing process may have a color distinct from the first area 711 which has not undergone a laser post-processing process. For example, the first area 711 has not undergone a laser post-processing process after an anodizing process and thus may have a color caused by the anodizing process, and the second area 712 has undergone a laser post-processing process after an anodizing process and thus may have a color different from the color caused by the anodizing process.

In an embodiment, the second area 712 and the injected part 720 may be distinguished by an external recognition device (not shown). The second area 712 and the outer exposure surface 725 of the injected part 720 may be distinguished by an external recognition device (not shown) due to the difference in reflective light. For example, since the external exposure surface 725 reflects a small amount of light compared to the second area 712, a recognition device (not shown) may easily distinguish the exposure surface 725 and the second area 712.

In an embodiment, the second area 712 may include a (2-1)th area 7121 and/or a (2-2)th area 7122. The (2-1)th area 7121 and the (2-2)th area 7122 may be formed by a laser post-processing process. The (2-1)th area 7121 may be an area surrounding the circumference of the opening 715. For example, the (2-1)th area 7121 may be formed to be oriented in the height direction (e.g., the z-axis direction) of the housing 700 on the circumferential of the opening 715.

In an embodiment, the (2-2)th area 7122 may be a surface facing the inside of the opening 715. For example, the (2-2)th area 7122 may extend along the height direction (e.g., the z-axis direction) of the housing 700 while facing the inside of the opening 715. The (2-2)th area 7122 may correspond to a boundary surface of the opening 715.

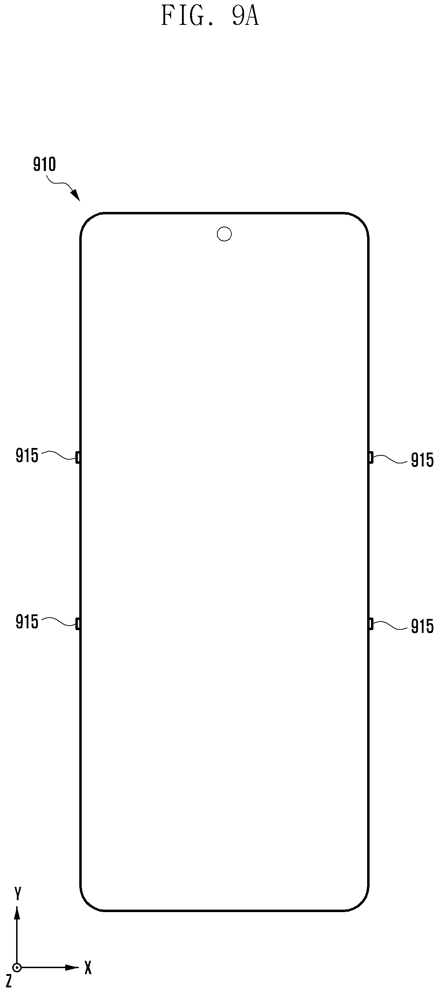

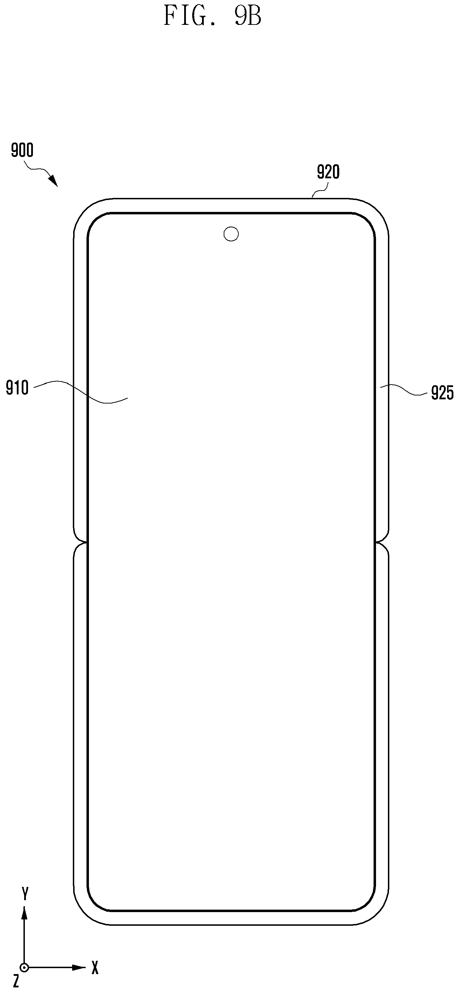

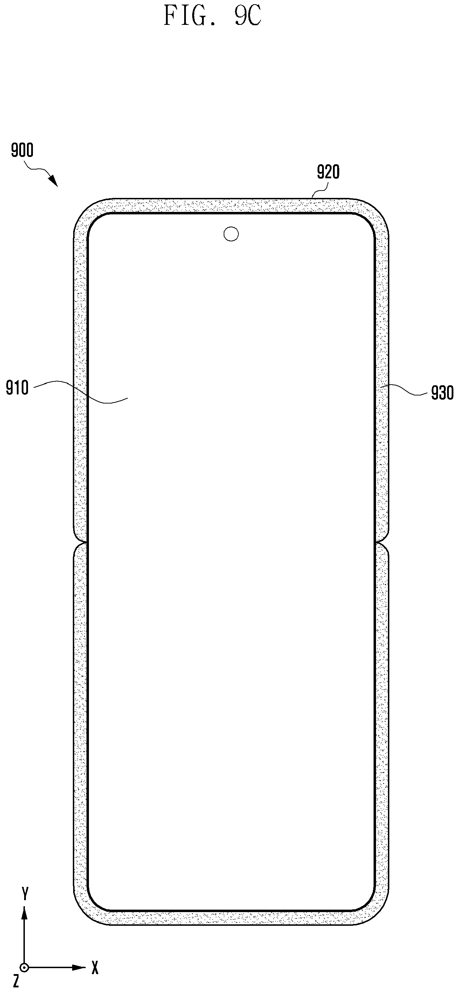

FIG. 9A, FIG. 9B, FIG. 9C, and FIG. 9D are views showing an electronic device 900 according to an embodiment of the disclosure.

FIG. 9A is a view showing a display 910 according to an embodiment. FIG. 9B is a view showing a display 910 disposed on a housing 920 according to an embodiment. FIG. 9C is a view showing an adhesive member 930 disposed on a housing 920. FIG. 9D is a view showing a decoration 940 coupled to a housing 920.

An electronic device 900 according to an embodiment may mean the electronic device 200 in FIG. 2A or may include at least a part of the electronic device 200.

In describing the electronic device 900 according to an embodiment of the disclosure, the length direction of the electronic device 900 may mean the y-axis direction, and the width direction of the electronic device 900 may mean the x-axis direction. The height direction of the electronic device 900 may mean the z-axis direction.

Referring to FIG. 9A, FIG. 9B, FIG. 9C, and FIG. 9D, the electronic device 900 according to an embodiment may include a display 910, a housing 920, an adhesive member 930, and/or a decoration 940.

The display 910 according to an embodiment may mean the first display 230 in FIG. 2A or may include at least a part of the first display 230.

Referring to FIG. 9A, the display 910 may include at least one guide protruding part 915. The guide protruding part 915 may be a portion extending to protrude from one side or the other side of the display 910.

Referring to FIG. 9A, although it is illustrated that four guide protruding parts 915 are formed on the display 910, it is an example for description, and the number of the guide protruding parts 915 is not limited thereto.

Referring to FIG. 9B, the display 910 may be disposed on the housing 920. The housing 920 may mean the housing 300 in FIG. 3 or may include at least a part of housing 300 in FIG. 3. For example, the housing 920 may include at least one opening (see 315 in FIG. 3).

In an embodiment, the display 910 may be disposed at a predetermined position on the housing 920 by using the guide protruding part 915 and an opening (see 315 in FIG. 3). For example, the position of an opening (see 315 in FIG. 3) formed through the housing 920 may be recognized through an external recognition device (not shown), and the display 910 may be disposed at a predetermined position on the housing 920 by disposing the guide protruding part 915 at a position corresponding to an opening (see 315 in FIG. 3).

Referring to FIG. 9B, the periphery area 925 of the housing 920 may be positioned along the periphery the display 910. The periphery area 925 of the housing 920 may be an area in which the decoration 940 is disposed.

Referring to FIG. 9B and FIG. 9C, the adhesive member 930 may be disposed in the periphery area 925 of the housing 920, which is positioned along the periphery of the display 910. For example, the adhesive member 930 may be disposed along the periphery of the display 910 on one surface of the housing 920. The adhesive member 930 may include an adhesive material (e.g., a bond or a double-sided tape).

Referring to FIG. 9D, the decoration 940 may be coupled to one surface of the housing 920. The decoration 940 may be coupled to the periphery area 925 on the one surface of the housing 920 by using the adhesive member 930. The decoration 940 may extend along the periphery of the display 910 on the one surface of the housing 920.

In an embodiment, the decorative 940 may be disposed at a predetermined position on the housing 920 by using an opening (see 315 in FIG. 3) formed through the housing 920. The decoration 940 may be disposed based on the position of an opening (see 315 in FIG. 3) formed through the housing 920 even in case that an area of the housing 920, in which the decoration 940 disposed, is relatively narrow, and thus the decoration 940 may be easily disposed at a predetermined position on the housing 920.

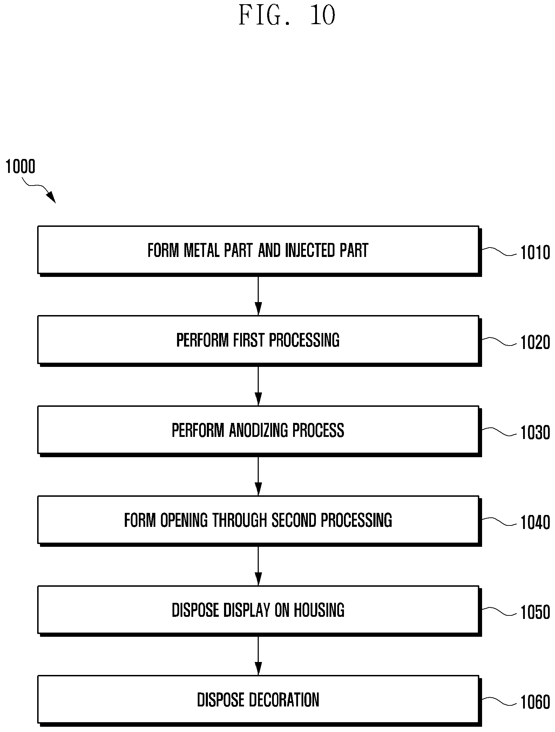

FIG. 10 is a flowchart showing a manufacturing method 1000 an electronic device according to an embodiment of the disclosure.

In an embodiment, a manufacturing method 1000 of an electronic device may be performed according to the flowchart illustrated in FIG. 10. The flowchart illustrated in FIG. 10 may be merely a flowchart according to an embodiment of the manufacturing method 1000 of an electronic device, the order of operations may be changed or operations may be performed simultaneously.

In an embodiment, the manufacturing method 1000 of an electronic device may mean a method of manufacturing the electronic device 200 or 900 including the housing 300 in FIG. 3.

Referring to FIG. 10, the manufacturing method 1000 of the electronic device includes an operation 1010 of forming the metal part 310 and the injected part 320, an operation 1020 of performing first processing, an operation 1030 of performing an anodizing process, an operation 1040 of forming an opening through second processing, an operation 1050 of disposing a display on a housing, and/or an operation 1060 of disposing a decoration.

In an embodiment, in the operation of forming the metal part 310 and the injected part 320, the metal part 310 and the injected part 320 may be formed. The metal part 310 may include a metal material forming the exterior of the housing 300. The injected part 320 may be an area among areas of the housing 300, which is formed through an injection mold process.

In an embodiment, in the operation of forming the metal part 310 and the injected part 320, the injected part 320 may be formed in at least a part of the metal part 310. The metal part 310 may be disposed to surround at least a part of the injected part 320.

In an embodiment, in the operation 1020 of performing first processing, at least a part of the injected part 320 and the metal part 310 may be removed through processing. The first processing may mean processing performed before applying an anodizing process to the housing 300. A part of the metal part 310 and the injected part 320 may be removed through the first processing so that the side surface 341 and the seat part 342 of the housing 300 may be formed. A part of the injected part 320 may be removed through the first processing so that at least a part of the injected part 320 is exposed to the outside of the housing 300.

In an embodiment, in the operation 1030 of performing an anodizing process, an anodizing process may be applied to the surface of the housing 300. For example, an oxidation film may be formed on the surface of the injected part320 and a surface of the metal part 310 of housing 300, which is exposed to the outside, through an anodizing process. The surface of the housing 300 may have a color caused by an anodizing process.

In an embodiment, in the operation 1040 of forming an opening through second processing, the opening 315 may be formed through the housing 300. The second processing may mean processing performed on the housing 300 after an anodizing process. The opening 315 may be formed by removing at least a part of the metal part 310 and the injected part 320 through the second processing. The opening 315 may be formed in a blocked shape by the injected part 320.

In an embodiment, in the operation 1040 of forming an opening through second processing, the metal part 310 may be divided into the first area 311 and the second area 312 through the second processing. The first area 311 may be an area among areas of the metal part 310, which has not undergone the second processing. The second area 312 may be an area among areas of the metal part 310, which has undergone the second processing. The second area 312 may have the color of a metal material included in the housing 300 through the second processing rather than the color caused by an anodizing process.

In the flowchart in FIG. 10, although it is shown that the operation of forming the opening 315 through second processing is performed after an anodizing process, it is an example, and in case that the housing 700 according to an embodiment is manufactured, the first processing and the second processing may be performed simultaneously. In case that the housing 700 according to an embodiment is manufactured, the opening 715 may be formed through the first processing and the second processing before an anodizing process is performed. In case that the housing 700 according to an embodiment is manufactured, a laser post-processing process may be applied around the opening 715 after the opening 715 is formed.

In an embodiment, in the operation 1050 of disposing a display on a housing, the display 910 may be disposed on the housing 920. The display 910 may include the guide protruding part 915, and the housing 920 may include at least one opening 315. In the operation 1050 of disposing a display on a housing, the guide protruding part 915 of the display 910 is disposed to correspond to the opening 315 of the housing 920 so that the display 910 is disposed at a predetermined position on the housing 920.

In an embodiment, in the operation 1060 of disposing a decoration, the decoration 940 may be disposed on one surface of the housing 920. The decoration 940 may be disposed on the one surface of the housing 920, based on the position of the opening 315 formed through the housing 920. The decoration 940 may be coupled to the one surface of the housing 920 by using the adhesive member 930 disposed on one surface of the housing 920. The decoration 940 may have a shape extending along the periphery of the display 910.

An electronic device 200 according to an embodiment of the disclosure may include a housing 300 and a display 230 disposed on one surface of the housing.

The housing 300 according to an embodiment of the disclosure includes an opening 315 of which the position is recognized by an external recognition device, a metal part 310 formed in the outer direction of the opening 315, and an injected part 320 which is formed through an injection mold process and at least a part of which is disposed in the inner direction of the opening 315. In this way, the boundary surface of the opening 315 can be relatively uniformly formed, which avoids the degradation in recognition rate of the external recognition device due to injection burr. The metal part 310 includes a first area 311 having a predetermined color through an anodizing process, and a second area 312 formed by at least a part of the metal part 310, which is processed after undergoing an anodizing process and positioned outside the circumference of the opening 315. In this way, the distinction between the metal part 310 and the opening 315 can be enhanced such that the external recognition device can easily identify the opening 315 and thus improve the precision of assembling the components of the electronic device.

In an embodiment, the opening 315 may be formed so that the circumference of the opening 315 has a circular shape.

In an embodiment, the second 312 area may be an area among areas of the metal part 310, which has undergone a laser post-processing process.

In an embodiment, the injected part 320 and the second area 312 of the metal part 310 may be recognized to be distinct from each other by an external recognition device due to a difference in reflective light.

In an embodiment, the display 910 may be disposed at a predetermined position on the housing 920, based on the position of the opening 315 recognized by an external recognition device.

In an embodiment, the electronic device may further include a decoration 940 disposed around the display 910 on the one surface of the housing 920, and the decoration 940 may be disposed at a predetermined position on the housing 920, based on the position of the opening 315 recognized by an external recognition device.

In an embodiment, the housing 300 may include a first housing 301 and a second housing 302 connected to the first housing 301, and each of the first housing 301 and the second housing 302 may include the opening 315, the injected part 320, and the metal part 310.

In an embodiment, the electronic device 200 may further include a hinge 303 configured to connect the first housing 301 and the second housing 302 so as to be rotatable with respect to each other around a folding axis F of the electronic device 200.

In an embodiment, the opening 315 positioned in the first housing 301 and the opening 315 positioned in the second housing 302 may be arranged at symmetrical positions centered on the folding axis F.

In an embodiment, the first area 311 may be formed through first processing performed before an anodizing process, and the second area 312 and the opening 315 may be formed through second processing performed after an anodizing process.

In an embodiment, the display 910 may include a guide protruding part 915configured to guide the display 910 to be disposed at a predetermined position on the housing 920.

A manufacturing method 1000 of an electronic device according to an embodiment of the disclosure may include an operation 1010 of forming a metal part 310 and an injected part 320 constituting a housing 300 of an electronic device 200, an operation 1020 of performing first processing on the metal part 310 and the injected part 320, an operation 1030 of performing an anodizing process on the metal part 310 and the injected part 320, and an operation 1040 of performing second processing to form an opening in the metal part 310 and the injected part 320. By virtue of the manufacturing process 1000 according to the present disclosure, the distinction between the metal part 310 and the opening 315 can be advantageously enhanced.

In an embodiment, the position of the opening 315 may be recognized by an external recognition device.

In an embodiment, the manufacturing method 1000 of an electronic device may further include, after the operation 1040 of performing second processing to form an opening in the metal part 310 and the injected part 320 is completed, an operation 1050 of disposing a display 910 on the housing 920, based on the position of the opening 315, and an operation 1060 of attaching a decoration 940 onto the housing 920 to surround the periphery of the display 910.

In an embodiment, the injected part 320 including an upper end area 321, a lower end area 323, and a connection area 322 connecting the upper end area 321 and the lower end area 323 may be formed by the operation 1010 of forming a metal part 310 and an injected part 320 constituting a housing 300 of the electronic device 200.

In an embodiment, at least a part of the upper end area 321 of the injected part 320 may be removed by the operation 1020 of performing first processing on the metal part 310 and the injected part 320.

In an embodiment, at least a part of the upper end area 321, the connection area 322, and the lower end area 323 of the injected part 320 may be removed by the operation 1040 of performing second processing to form an opening in the metal part 310 and the injected part 320.

The electronic device according to an embodiment of the disclosure may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that an embodiment of the disclosure and the terms used therein are not intended to limit the technological features set forth herein to particular embodiments and the disclosure includes various changes, equivalents, and/or alternatives for a corresponding embodiment. With regard to the description of the drawings, similar reference numerals may be used to designate similar or relevant elements. It is to be understood that a singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in an embodiment of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

An embodiment of the disclosure may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store ^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may also be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration.

According to various embodiments, operations performed by the module, the program, or another element may be carried out sequentially, in parallel, repeatedly, or heuristically, or one or more of the operations may be executed in a different order or omitted, or one or more other operations may be added.

## Claims

1. A housing (300) of an electronic device, comprising:
an opening (315) of which the position is recognizable by an external recognition device;
a metal part (310) formed in the outer direction of the opening (315); and
an injected part (320) which is formed through an injection mold process and at least a part of which is disposed in the inner direction of the opening (315), and
wherein the metal part (310) comprises:
a first area (311) having a predetermined color through an anodizing process; and
a second area (312) formed by at least a part of the metal part (310), which is processed after undergoing an anodizing process and positioned outside the circumference of the opening (315).

2. The housing (300) of claim 1, wherein the opening (315) is formed so that the circumference of the opening (315) has a circular shape.

3. The housing (300) of claim 1 or 2, wherein the second area (312) is an area among areas of the metal part (310), which has undergone a laser post-processing process.

4. The housing (300) of any one of the preceding claims, wherein the injected part (320) and the second area (312) of the metal part (310) are recognizable to be distinct from each other by the external recognition device due to a difference in reflective light.

5. The housing (300) of any one of the preceding claims, wherein the first area (311) is formed through first processing performed before the anodizing process, and
wherein the second area (312) and the opening (315) are formed through second processing performed after the anodizing process.

6. An electronic device (200) comprising:
a housing (300) according to any one of the preceding claims; and
a display (230) disposed on one surface of the housing (300).

7. The electronic device of claim 6, wherein the display (230) is disposed at a predetermined position on the housing (300), based on the position of the opening (315) recognizable by the external recognition device, and
wherein the display (230) comprises a guide protruding part (915) configured to guide the display (230) to be disposed at a predetermined position on the housing (300).

8. The electronic device of claim 6 or 7, further comprising a decoration (940) disposed around the display (230) on the one surface of the housing (300),
wherein the decoration is disposed at a predetermined position on the housing (300), based on the position of the opening (315) recognizable by the external recognition device.

9. The electronic device of any one of claims 6 to 8, wherein the housing (300) comprises:
a first housing (301); and
a second housing (302) connected to the first housing (301),
wherein each of the first housing (301) and the second housing (302) comprises the opening (315), the injected part (320), and the metal part (310),
wherein the electronic device further comprises a hinge (303) configured to connect the first housing (301) and the second housing (302) so as to be rotatable with respect to each other around a folding axis (F) of the electronic device, and
wherein the opening (315) positioned in the first housing (301) and the opening (315) positioned in the second housing (302) are arranged at symmetrical positions centered on the folding axis.

10. A manufacturing method (1000) of an electronic device (200), comprising:
an operation (1010) of forming a metal part (310) and an injected part (320) constituting a housing (300) of the electronic device;
an operation (1020) of performing first processing on the metal part (310) and the injected part (320);
an operation (1030) of performing an anodizing process on the metal part (310) and the injected part (320); and
an operation (1040) of performing second processing to form an opening (315) in the metal part (310) and the injected part (320).

11. The manufacturing method of claim 10, wherein the position of the opening (315) is recognizable by an external recognition device.

12. The manufacturing method of claim 10 or 11, further comprising, after the operation of performing second processing to form an opening (315) in the metal part (310) and the injected part (320) is completed:
an operation (1050) of disposing a display (910) on the housing (300), based on the position of the opening (315); and
an operation (1060) of attaching a decoration (940) onto the housing (300) to surround the periphery of the display (910).

13. The manufacturing method of any one of claims 10 to 12, wherein the injected part (320) comprising an upper end area (321), a lower end area (323), and a connection area (322) connecting the upper end area and the lower end area is formed by the operation of forming a metal part (310) and an injected part (320) constituting a housing (300) of the electronic device,
wherein at least a part of the upper end area of the injected part (320) is removed by the operation of performing first processing on the metal part (310) and the injected part (320), and/or
wherein at least a part of the upper end area, the connection area, and the lower end area of the injected part (320) is removed by the operation of performing second processing to form an opening (315) in the metal part (310) and the injected part (320).

## Patentansprüche

1. Gehäuse (300) einer elektronischen Vorrichtung, umfassend:
eine Öffnung (315), deren Position durch eine externe Erkennungsvorrichtung erkennbar ist;
ein Metallteil (310), das in äußerer Richtung der Öffnung (315) ausgebildet ist; und
ein Spritzgussteil (320), das durch ein Spritzgussverfahren ausgebildet ist und von dem zumindest ein Teil in der inneren Richtung der Öffnung (315) angeordnet ist, und
wobei das Metallteil (310) umfasst:
einen ersten Bereich (311), der durch ein Anodisierungsverfahren eine vorbestimmte Farbe erhält; und
einen zweiten Bereich (312), der von mindestens einem Teil des Metallteils (310) ausgebildet wird, der nach einem Anodisierungsverfahren bearbeitet wird und außerhalb des Umfangs der Öffnung (315) positioniert ist.

2. Gehäuse (300) nach Anspruch 1, wobei die Öffnung (315) so ausgebildet ist, dass der Umfang der Öffnung (315) eine Kreisform aufweist.

3. Gehäuse (300) nach Anspruch 1 oder 2, wobei der zweite Bereich (312) ein Bereich zwischen Bereichen des Metallteils (310) ist, der einem Lasernachbearbeitungsverfahren unterzogen wurde.

4. Gehäuse (300) nach einem der vorhergehenden Ansprüche, wobei das Spritzgussteil (320) und der zweite Bereich (312) des Metallteils (310) von der externen Erkennungsvorrichtung aufgrund eines Unterschieds im Reflexionslicht als voneinander verschieden erkennbar sind.

5. Gehäuse (300) nach einem der vorhergehenden Ansprüche, wobei der erste Bereich (311) durch eine erste Bearbeitung ausgebildet wird, die vor dem Anodisierungsverfahren durchgeführt wird, und
wobei der zweite Bereich (312) und die Öffnung (315) durch eine zweite Bearbeitung ausgebildet werden, die nach dem Anodisierungsverfahren durchgeführt wird.

6. Elektronische Vorrichtung (200), umfassend:
ein Gehäuse (300) nach einem der vorhergehenden Ansprüche; und
eine Anzeige (230), die auf einer Fläche des Gehäuses (300) angeordnet ist.

7. Elektronische Vorrichtung nach Anspruch 6, wobei die Anzeige (230) an einer vorbestimmten Position am Gehäuse (300) angeordnet ist, basierend auf der Position der Öffnung (315), die durch die externe Erkennungsvorrichtung erkennbar ist, und
wobei die Anzeige (230) ein vorstehendes Führungsteil (915) umfasst, das so konfiguriert ist, dass es die Anzeige (230) so führt, dass sie an einer vorbestimmten Position am Gehäuse (300) angeordnet wird.

8. Elektronische Vorrichtung nach Anspruch 6 oder 7, ferner umfassend eine Dekoration (940), die um die Anzeige (230) auf der einen Fläche des Gehäuses (300) angeordnet ist,
wobei die Dekoration an einer vorbestimmten Position am Gehäuse (300) angeordnet ist, basierend auf der Position der Öffnung (315), die durch die externe Erkennungsvorrichtung erkennbar ist.

9. Elektronische Vorrichtung nach einem der Ansprüche 6 bis 8, wobei das Gehäuse (300) umfasst:
ein erstes Gehäuse (301); und
ein zweites Gehäuse (302), das mit dem ersten Gehäuse (301) verbunden ist,
wobei jedes des ersten Gehäuses (301) und des zweiten Gehäuses (302) die Öffnung (315), das Spritzgussteil (320) und das Metallteil (310) umfassen,
wobei die elektronische Vorrichtung ferner ein Scharnier (303) umfasst, das konfiguriert ist, um das erste Gehäuse (301) und das zweite Gehäuse (302) so miteinander zu verbinden, dass sie um eine gefaltete Achse (F) der elektronischen Vorrichtung drehbar sind, und
wobei die im ersten Gehäuse (301) positionierte Öffnung (315) und die im zweiten Gehäuse (302) positionierte Öffnung (315) an symmetrischen, auf der Faltachse zentrierten Positionen angeordnet sind.

10. Herstellungsverfahren (1000) einer elektronischen Vorrichtung (200), umfassend:
einen Vorgang (1010) zur Ausbildung eines Metallteils (310) und eines Spritzgussteils (320), die ein Gehäuse (300) der elektronischen Vorrichtung bilden;
einen Vorgang (1020) zur Durchführung einer ersten Bearbeitung des Metallteils (310) und des Spritzgussteils (320);
einen Vorgang (1030) zur Durchführung eines Anodisierungsverfahrens an dem Metallteil (310) und dem Spritzgussteil (320); und
einen Vorgang (1040) zur Durchführung einer zweiten Bearbeitung, um eine Öffnung (315) in dem Metallteil (310) und dem Spritzgussteil (320) zu bilden.

11. Herstellungsverfahren nach Anspruch 10, wobei die Position der Öffnung (315) durch eine externe Erkennungsvorrichtung erkennbar ist.

12. Herstellungsverfahren nach Anspruch 10 oder 11, ferner umfassend, nach Abschluss des Vorgangs der Durchführung einer zweiten Bearbeitung zur Ausbildung einer Öffnung (315) in dem Metallteil (310) und dem Spritzgussteil (320):
einen Vorgang (1050) des Anordnens einer Anzeige (910) am Gehäuse (300), basierend auf der Position der Öffnung (315); und
einen Vorgang (1060) des Befestigens einer Dekoration (940) auf dem Gehäuse (300), um den Umfang der Anzeige (910) zu umgeben.

13. Herstellungsverfahren nach einem der Ansprüche 10 bis 12, wobei das Spritzgussteil (320), das einen oberen Endbereich (321), einen unteren Endbereich (323) und einen Verbindungsbereich (322) umfasst, der den oberen Endbereich und den unteren Endbereich verbindet, durch den Vorgang des Ausbildens eines Metallteils (310) und eines Spritzgussteils (320) ausgebildet wird, die ein Gehäuse (300) der elektronischen Vorrichtung bilden,
wobei zumindest ein Teil des oberen Endbereichs des Spritzgussteils (320) durch den Vorgang der Durchführung der ersten Bearbeitung des Metallteils (310) und des Spritzgussteils (320) entfernt wird, und/oder
wobei zumindest ein Teil des oberen Endbereichs, des Verbindungsbereichs und des unteren Endbereichs des Spritzgussteils (320) durch den Vorgang der Durchführung der zweiten Bearbeitung entfernt wird, um eine Öffnung (315) in dem Metallteil (310) und dem Spritzgussteil (320) auszubilden.

## Revendications

1. Boîtier (300) d'un dispositif électronique, comprenant :
une ouverture (315) dont la position est reconnaissable par un dispositif de reconnaissance externe ;
une partie métallique (310) formée vers la direction extérieure de l'ouverture (315) ; et
une partie injectée (320) formée par un processus de moulage par injection et dont au moins une partie est disposée dans la direction intérieure de l'ouverture (315), et
dans lequel la partie métallique (310) comprend :
une première zone (311) ayant une couleur prédéterminée par un processus d'anodisation ; et
une seconde zone (312) formée par au moins une partie de la partie métallique (310) traitée après avoir subi un processus d'anodisation et positionnée à l'extérieur de la circonférence de l'ouverture (315).

2. Boîtier (300) de la revendication 1, dans lequel l'ouverture (315) est formée de sorte que la circonférence de l'ouverture (315) présente une forme circulaire.

3. Boîtier (300) de la revendication 1 ou 2, dans lequel la seconde zone (312) est une zone parmi les zones de la partie métallique (310), qui a subi un processus de post-traitement au laser.

4. Boîtier (300) de l'une quelconque des revendications précédentes, dans lequel la partie injectée (320) et la seconde zone (312) de la partie métallique (310) sont reconnaissables pour être distinctes l'une de l'autre par le dispositif de reconnaissance externe en raison d'une différence de lumière de réflexion.

5. Boîtier (300) de l'une quelconque des revendications précédentes, dans lequel la première zone (311) est formée par un premier traitement réalisé avant le processus d'anodisation, et
dans lequel la seconde zone (312) et l'ouverture (315) sont formées par un second traitement effectué après le processus d'anodisation.

6. Dispositif électronique (200) comprenant :
un boîtier (300) de l'une quelconque des revendications précédentes ; et
un affichage (230) disposé sur une surface du boîtier (300).

7. Dispositif électronique de la revendication 6, dans lequel l'affichage (230) est disposé à une position prédéterminée sur le boîtier (300), en se basant sur la position de l'ouverture (315) reconnaissable par le dispositif de reconnaissance externe, et
dans lequel l'affichage (230) comprend une partie saillante de guidage (915) configurée pour guider l'affichage (230) afin qu'il soit disposé à une position prédéterminée sur le boîtier (300).

8. Dispositif électronique de la revendication 6 ou 7, comprenant en outre une décoration (940) disposée autour de l'affichage (230) sur l'une surface du boîtier (300),
dans lequel la décoration est disposée à une position prédéterminée sur le boîtier (300), en se basant sur la position de l'ouverture (315) reconnaissable par le dispositif de reconnaissance externe.

9. Dispositif électronique l'une quelconque des revendications 6 à 8, dans lequel le boîtier (300) comprend :
un premier boîtier (301) ; et
un deuxième boîtier (302) relié au premier boîtier (301),
dans lequel le premier boîtier (301) et le second boîtier (302) comprennent chacun l'ouverture (315), la partie injectée (320) et la partie métallique (310),
dans lequel le dispositif électronique comprend en outre une charnière (303) configurée pour relier le premier boîtier (301) et le second boîtier (302) de manière à pouvoir tourner l'un par rapport à l'autre autour d'un axe de pliage (F) du dispositif électronique, et
dans lequel l'ouverture (315) positionnée dans le premier boîtier (301) et l'ouverture (315) positionnée dans le second boîtier (302) sont disposées à des positions symétriques centrées sur l'axe de pliage.

10. Procédé de fabrication (1000) d'un dispositif électronique (200), comprenant :
une opération (1010) de formation d'une partie métallique (310) et d'une partie injectée (320) constituant un boîtier (300) du dispositif électronique ;
une opération (1020) consistant à effectuer un premier traitement sur la partie métallique (310) et la partie injectée (320) ;
une opération (1030) consistant à réaliser un processus d'anodisation sur la partie métallique (310) et la partie injectée (320) ; et
une opération (1040) consistant à effectuer un second traitement pour former une ouverture (315) dans la partie métallique (310) et la partie injectée (320).

11. Procédé de fabrication de la revendication 10, dans lequel la position de l'ouverture (315) est reconnaissable par un dispositif de reconnaissance externe.

12. Procédé de fabrication de la revendication 10 ou 11, comprenant en outre, après l'opération de réalisation d'un second traitement pour former une ouverture (315) dans la partie métallique (310) et la partie injectée (320) est terminée :
une opération (1050) consistant à disposer un affichage (910) sur le boîtier (300), en se basant sur la position de l'ouverture (315) ; et
une opération (1060) de fixation d'une décoration (940) sur le boîtier (300) pour entourer la périphérie de l'affichage (910).

13. Procédé de fabrication de l'une quelconque des revendications 10 à 12, dans lequel la partie injectée (320) comprenant une zone d'extrémité supérieure (321), une zone d'extrémité inférieure (323) et une zone de connexion (322) reliant la zone d'extrémité supérieure et la zone d'extrémité inférieure est formée par l'opération de formation d'une partie métallique (310) et d'une partie injectée (320) constituant un boîtier (300) du dispositif électronique,
dans lequel au moins une partie de la zone d'extrémité supérieure de la partie injectée (320) est enlevée par l'opération consistant à effectuer un premier traitement sur la partie métallique (310) et la partie injectée (320), et/ou
dans lequel au moins une partie de la zone d'extrémité supérieure, de la zone de connexion et de la zone d'extrémité inférieure de la partie injectée (320) est enlevée par l'opération consistant à effectuer un second traitement pour former une ouverture (315) dans la partie métallique (310) et la partie injectée (320).
